# EUROPÄISCHE PATENTSCHRIFT

(11) **EP 1 736 371 B1**
(45) Veröffentlichungstag und Bekanntmachung des Hinweises auf die Patenterteilung: **03.10.2007**
(21) Anmeldenummer: 06012581.2
(22) Anmeldetag: 20.06.2006
(51) Int. Cl.: B60R 21/13

(54) **Kraftfahrzeug mit einem Überrollschutzsystem**
Vehicle with a roll-over protection system
Véhicule avec système de protection en cas de retournement

(30) Priorität: 24.06.2005 DE 102005029451
(43) Veröffentlichungstag der Anmeldung: 27.12.2006
(73) Patentinhaber: Wilhelm Karmann GmbH, 49084 Osnabrück (DE)
(72) Erfinder: Kasubke, Wolfgang, 49124 Georgsmarienhütte (DE); Kohlem, Michael, 49084 Osnabrück (DE)

(56) Entgegenhaltungen:
- EP-A1- 1 340 655
- EP-A2- 1 084 914
- DE-B3- 10 349 693
- DE-C1- 19 838 989

## Beschreibung

Die Erfindung betrifft ein Kraftfahrzeug, insbesondere für ein Cabriolet-Fahrzeug, mit einem Überrollschutzsystem nach der im Oberbegriff des Patentanspruches 1 näher definierten Art.

Bei Personenkraftwagen oder auch bei Traktoren ist es bekannt, zur Schaffung eines Überlebensraumes für Insassen im Falle eines Fahrzeugüberschlags Überrollschutzsysteme bereitzustellen, welche einen Überrollkörper, wie z. B. einen Überrollbügel aufweisen, welcher einem einzelnen Fahrzeugsitz oder mehreren Fahrzeugsitzen zugeordnet ist und der in seiner Ruhelage in einer fahrzeugfesten Kassette verborgen ist, aus der er bei Erkennen einer Verunfallung des Fahrzeugs schlagartig in eine obere Stützlage verlagerbar und in dieser Stützlage verriegelbar ist.

In der Praxis allgemein verwendete Überrollbügel bestehen typischerweise aus einem U-förmigen Bügel, dessen rohrförmige Schenkel in Standrohren eines fahrzeugfesten Moduls vertikal geführt sind. Im Inneren jedes Schenkels ist eine Spiralfeder angeordnet, welche durch eine Haltevorrichtung unter Vorspannung gehalten wird, die in Abhängigkeit eines Crash-Signals der Fahrzeugsensorik lösbar ist, wodurch der Überrollbügel unter der Wirkung der Feder in Zehntelsekunden ausgefahren und in seiner Stützlage durch eine geeignete Verriegelungsvorrichtung arretiert wird. Die beiden rohrförmigen Schenkel sind dabei durch ein Querjoch miteinander verbunden, über das meist ein gepolstertes Prallelement geschoben ist.

In der DE 195 40 819 C2 und der DE 197 12 955 A1 sind Beispiele für einen sich über die gesamte Fahrzeugbreite erstreckenden, im Crash-Fall ausfahr- oder ausschwenkbaren Überrollbügel beschrieben.

Als Beispiel für eine nur einem Fahrzeugsitz zugeordnete Überrollschutz-Vorrichtung mit einem Überrollkörper, welcher unabhängig von einem einem anderen Fahrzeugsitz zugeordneten Überrollkörper ausfahrbar ist, wird exemplarisch auf die DE 198 38 989 C1 verwiesen. Darin ist eine einem jeden Fahrzeugsitz zugeordnete Überrollschutz-Vorrichtung offenbart, bestehend aus einer fahrzeugfest angeordneten Kassette, einem in der Kassette ausfahrbar in Führungen gehaltenen und geführtem Überrollkörper in Form eines sich über die gesamte Kassettenbreite erstreckenden Profilbügelkörpers, einer Verriegelungsvorrichtung zur Selbstverriegelung der Ausfahrbewegung und einem Federantriebssystem zum Ausfahren des Profil-Bügelkörpers und mit einer mechanischen Haltevorrichtung zum Halten des Überrollkörpers in einem Ruhezustand und gegen der Vorspannkraft einer Druckfeder des Federantriebssystems.

Aus der EP 1340655 A ist ein gattungsgemäße Fahrzeug bekannt.

Allen vorgenannten Überrollschutzsystemen ist gemein, dass das fahrzeugfeste Modul der betreffenden Überrollschutz-Vorrichtung jeweils als robuste Kassette oder ein entsprechendes Rohrprofil ausgestaltet ist und im Bereich einer hinter den Fahrerzeugsitzen angeordneten Fahrzeugquerwand angeordnet wird.

Je nach Gestaltung des fahrzeugfesten Moduls ist dies nachteilhafterweise mit einer hohen Bauteilanzahl und einem insgesamt hohen Gewicht für das Überrollschutzsystem und somit für das gesamte Kraftfahrzeug verbunden.

Die vorbeschriebenen Überrollschutzsysteme weisen zudem den Nachteil auf, dass eine Durchlademöglichkeit zwischen einem heckseitigen Ablageraum und einem Fahrgastraum aufgrund der zur Gewährleistung der geforderten Steifigkeit häufig sehr breiten Kassetten des fahrzeugfesten Moduls der betreffenden Überrollschutz-Vorrichtung oft nur sehr begrenzt ist.

So erlauben die in der Regel mittig zu einem Fahrzeugsitz angeordneten Überrollschutz-Vorrichtungen keine oder nur klein dimensionierte Durchladen zwischen einem Insassenraum und einem fahrzeugheckseitigen Stauraum, da für eine Durchladeöffnung nur der geringe Abstandsbereich zwischen den Überrollschutz-Vorrichtungen der jeweiligen Sitze zur Verfügung steht.

Es ist Aufgabe der vorliegenden Erfindung, ein Kraftfahrzeug, insbesondere ein Cabriolet-Fahrzeug, mit einem Überrollschutzsystem der eingangs genannten Art im Hinblick auf eine möglichst kompakte Bauweise mit wenigen, einfach zu montierenden Bauteilen und mit einem geringen Gewicht sowie bezüglich einer verbesserten Durchlademöglichkeit weiterzubilden.

Diese Aufgabe wird mit einem Kraftfahrzeug gemäß den Merkmalen des Patentanspruches 1 gelöst.

Es ist somit ein Kraftfahrzeug mit einem Überrollschutzsystem vorgesehen, welches aus wenigstens einer Überrollschutzvorrichtung für wenigstens einen Fahrzeugsitz besteht. Die Überrollschutzvorrichtung ist jeweils mit einem karosseriefest angeordneten ersten Modul mit Führungseinrichtungen für ein hierin zwischen einer abgesenkten Ruhelage und einer erhöhten Stützlage verfahrbares zweites Modul ausgebildet und weist eine lösbare Halteeinrichtung zum Halten des zweiten Moduls in seiner Ruhelage auf. Des Weiteren ist eine Verriegelungsvorrichtung vorgesehen, mittels der das zweite Modul in einer von seiner Ruhelage abweichenden Position gegen einen in Richtung der Ruhelage wirkenden Kraftangriff selbsttätig abstützbar ist. Weiterhin ist ein Antriebssystem mit einem Federkraftspeicher vorgesehen, mittels dem das zweite Modul in seiner Ruheposition vorgespannt und im Bedarfsfall in Richtung seiner Stützlage verlagerbar ist.

Die Erfindung sieht vor, dass das ausfahrbare zweite Modul mit einem kassettenartigen Überrollkörper ausgebildet ist, wobei eine vordere Wandung des Überrollkörpers an einer einem Insassenraum zugewandten Seite der Fahrzeugquerwand und eine hintere Wandung des Überrollkörpers an einer einem Insassenraum abgewandten Seite der Fahrzeugquerwand geführt ist.

Mit einer derartigen Ausgestaltung des Überrollschutzsystems wird die Fahrzeugquerwand, welche beispielsweise eine hinter Fondsitzen angeordnete Rückwand darstellen kann, integraler Bestandteil der jeweiligen Überrollschutz-Vorrichtung, da die Fahrzeugquerwand jeweils im Bereich einer Überrollschutz-Vorrichtung deren erstes, fahrzeugfestes Modul bildet.

Auf diese Weise werden auch die im Falle eines Fahrzeugüberschlags auf das Überrollschutzsystem und somit die Fahrzeugquerwand wirkenden Kräfte optimal in die tragende Fahrzeugstruktur eingeleitet.

Indem der Überrollkörper der Fahrzeugquerwand im Bereich der Überrollschutz-Vorrichtung gleichsam übergestülpt wird, ergibt sich eine einfache und gewichtssparende Bauweise mit wenigen Bauteilen, welche zum größten Teil aus handelsüblichem Halbzeug hergestellt sein können. Zudem reduziert sich entsprechend der Montageaufwand.

Die erfindungsgemäße Ausgestaltung des Kraftfahrzeugs ermöglicht des Weiteren eine Kompaktbauweise, welche insbesondere dann vorteilhaft ist, wenn zwischen einem heckseitigen Aufnahmeraum und einem Fahrgastraum eine Durchladeöffnung vorgesehen ist, welche bei einer Ausgestaltung des Kraftfahrzeugs gemäß der Erfindung entsprechend groß dimensioniert werden kann. Bei einer besonders vorteilhaften Ausführung kann die Fahrzeugquerwand doppelwandig mit einer vorderen Wand und einer hinteren Wand ausgeführt sein, so dass sich zwischen den Wänden der Fahrzeugquerwand ein Hohlraum ergibt, in dem Funktionskomponenten der Überrollschutz-Vorrichtungen des Überrollschutzsystems angeordnet werden können.

Weiterhin kann bei einer vorteilhaften Ausführung der Erfindung an der Fahrzeugquerwand eine Führungseinrichtung mit wenigstens einer Führungsschiene für die betreffende Wandung des Überrollkörpers angeordnet sein, wobei die Führungseinrichtung z. B. in einfacher Bauweise als ein Führungsblech und somit ein separates, an der Fahrzeugquerwand befestigtes Bauteil ausgebildet sein kann.

Die Führungsschienen für den Überrollkörper können an dem Führungsblech in einfacher Bauart durch von der Fahrzeugquerwand weggebogte Bereiche ausgebildet sein, so dass sich eine Hinterschneidung bzw. ein Abstand zwischen dem eine Führungsschiene bildenden Bereich des Führungsblechs und der entsprechend dem Fahrzeuginnenraum zugewandten oder abgewandten Seite der Fahrzeugquerwand ergibt. Bei einer derartigen Ausgestaltung weist der Überrollkörper zweckmäßigerweise an seiner der jeweiligen Seite der Fahrzeugquerwand zugeordneten Wandung U-förmige Bereiche auf, welche zum Hintergreifen der Führungsschienen ausgelegt sind.

In weiteren Ausführungen sind auch abweichend ausgebildete und zusätzliche Führungseinrichtungen, z. B. ein mittiges T-förmiges Führungsteil an dem Führungsblech, zur Realisierung der Führung des Überrollkörpers an der Fahrzeugquerwand denkbar.

Weiterhin ist es vorteilhaft, wenn die Fahrzeugquerwand im Bereich der Überrollschutz-Vorrichtung eine derartige Querschnittsverjüngung aufweist, dass die betreffende Wandung des Überrollkörpers wenigstens annähernd bündig zu einem umgebenden Bereich der Fahrzeugquerwand angeordnet ist, so dass sich die Überrollschutz-Vorrichtung nicht störend auswirkt.

Zur Verstärkung der Fahrzeugquerwand im Bereich der Überrollschutz-Vorrichtung kann bei einer doppelwandigen Fahrzeugquerwand ein einen Zwischenraum zwischen der vorderen Wand und der hinteren Wand der Fahrzeugquerwand überbrückendes Distanzbauteil angeordnet sein.

Ein solches beispielsweise quaderförmiges Distanzbauteil eignet sich aufgrund seiner Festigkeit auch zur Aufnahme des Federkraftspeichers des Antriebssystems, welcher beispielsweise in einer parallel zur Ausfahrrichtung des Überrollkörpers verlaufenden Axialbohrung angeordnet sein kann.

Der Überrollkörper ist bei einer bevorzugten Ausführung der Erfindung mehrteilig ausgeführt, wobei die vordere Wandung und die hintere Wandung des Überrollkörpers im Wesentlichen jeweils eine Platte darstellen, welche zumindest an ihrem oberen Ende miteinander verbunden sind.

Vorzugsweise ist diese Verbindung der Wandungen des Überrollkörpers mit einem Prallelement ausgeführt, welches eine an der Oberseite halbkreisförmig gerundete Prallfläche aufweisen kann und zur Erhöhung der Steifigkeit mit wenigstens einem Hohlraum ausgebildet sein kann. Zudem ist es vorteilhaft, wenn unterhalb des Prallelementes ein die Wandungen des Überrollkörpers verbindendes Brückenprofil vorgesehen ist.

In weiteren Ausführungen können auch zusätzliche Verbindungselemente zwischen den Wandungen des Überrollkörpers beispielsweise in dessen unterem Bereich vorgesehen sein, z. B. in Form von Bolzen, welche bei einer Verschiebung des Überrollkörpers in einer entsprechenden schlitzartigen Ausnehmung der Fahrzeugquerwand geführt sein können.

Neben einer mehrteiligen Ausführung des Überrollkörpers mit separaten Platten als Wandungen ist es auch denkbar, die Wandungen des Überrollkörpers mit zumindest einem Verbindungselement einstückig auszuführen.

Auch können die Wandungen des Überrollkörpers neben einer planaren plattenartigen Ausführung auch profiliert, gegebenenfalls mit Hohlräumen, ausgebildet sein.

Die lösbare Halteeinrichtung zum Halten des zweiten Moduls mit dem Überrollkörper in seiner Ruheposition kann bei einer vorteilhaften Ausführung ein um eine feste Drehachse schwenkbar gelagertes Verriegelungselement umfassen, welches einen Klinkenabschnitt zur Wirkverbindung mit einem an dem Überrollkörper angeordneten Verriegelungselement-Gegenkörper in Ruheposition des Überrollkörpers aufweist, wobei das Verriegelungselement in Ruheposition durch ein Sperrglied eines Aktuators gegen eine die Halteeinrichtung lösende Rotation gesichert ist.

Das Verriegelungselement kann bei einer vorteilhaften Ausführung scheibenartig ausgebildet sein und neben einem Klinkenabschnitt und einer umfangsseitige Ausnehmung, in die das Sperrglied des Aktuators in Ruheposition eingreift, einen umfangsseitigen Anschlag aufweisen, an dem das zur Überführung des zweiten Moduls in dessen Stützposition durch den Aktuator aus der Ausnehmung zurückgenommene Sperrglied nach einer den Klinkenabschnitt aus Eingriff mit dem Verriegelungs-Gegenkörper bringenden Rotation des Verriegelungselementes anliegt. Der Verriegelungs-Gegenkörper kann dabei als Haltelasche an dem die Wandungen des Überrollkörpers verbindendem Brückenprofil ausgebildet sein.

Eine solche Ausgestaltung der lösbaren Halteeinrichtung und der hiermit ausgestatteten Überrollschutz-Vorrichtung ermöglicht eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann. Das scheibenartige Verriegelungselement ersetzt dabei die Hebel eines bekannten Doppelhebelsystems und kann ohne Federeinrichtung gegenüber dem Sperrglied des Aktuators gelagert werden.

In einfacher Ausgestaltung kann es vorgesehen sein, dass das Sperrglied durch den Aktuator in Axialrichtung linear bewegbar ist, womit eine Ausgestaltung des Aktuators z. B. als elektromagnetischer oder piezoelektrischer Aktuator, welcher das Sperrglied in dessen Axialrichtung zur Auslösung des Überrollkörpers zurückzieht, möglich ist. Das Sperrglied kann dabei ein mittels einer Feder entgegen dem Verriegelungselement vorgespannter Stift oder ein Blechelement einfacher Bauart sein.

In einer vorteilhaften Ausgestaltung der Erfindung wird die Drehachse des Verriegelungselements durch einen Bolzen gebildet, welcher an gegenüberliegenden Seiten eines Grundkörpers gelagert ist, wobei die Seiten des Grundkörpers durch eine Traverse miteinander verbunden sind, welche einen Sitz für den Aktuator bildet. Der Grundkörper stellt somit eine Art Käfig für die lösbare Halteeinrichtung dar, mit dem die Halteeinrichtung an beliebigen karosseriefesten Bauelementen des Überrollschutzsystems angeordnet werden kann.

Eine weitere vorteilhafte Ausführung der Erfindung kann auch vorsehen, dass das schwenkbare Verriegelungselement, welches mit einem Verriegelungselement-Gegenkörper des zweiten Moduls in Ruheposition des Überrollkörpers in Eingriff steht und im Crash-Fall den Überrollkörper zur Überführung in dessen Stützposition freigibt, in Ruheposition durch einen im Crash-Fall aufschmelzbaren Schmelzeinsatz des Aktuators gehalten ist.

Die Verwendung eines Schmelzeinsatzes zum Halten des Verriegelungselementes und zum Aufheben der Verriegelungsstellung im Crash-Fall gewährleistet auf einfache und kostengünstige Art und Weise eine zuverlässige und schnelle Auslösung des Überrollkörpers. Der Schmelzeinsatz kann dabei prinzipiell eine beliebige Form haben und z. B. plattenförmig oder stab- bzw. drahtförmig ausgebildet sein.

In weiterer vorteilhafter Ausgestaltung der Erfindung kann das Verriegelungselement in der Ruhelage auch in einer Anschlagposition gehalten sein, aus der es im Crash-Fall durch einen Aktuator mit einem pyrotechnischen Treibsatz in eine Rotationsposition überführbar ist.

Die Verriegelungsvorrichtung der jeweiligen Überrollschutz-Vorrichtung kann wenigstens eine erste Rasteinrichtung aufweisen, die zum Abstützen des zweiten Moduls mit einer zweiten Rasteinrichtung in Wirkverbindung bringbar ist und die eine Bewegung des zweiten Moduls ausgehend von seiner Ruhelage in Richtung seiner Stützlage zulässt. Vorzugsweise weist die erste Rasteinrichtung eine an dem ersten Modul oder dem zweiten Modul axial schwimmend gegen eine Feder gelagerte oder drehbar gelagerte Sperrklinke mit wenigstens einer Rastklaue auf, die mit einem Rastelement der an dem jeweils anderen Modul angeordneten zweiten Rasteinrichtung zusammenwirkt.

Die zweite Rasteinrichtung kann mit einem aus einem Strangpressprofil hergestellten und wenigstens annähernd leistenförmig ausgeführten Rastelement mit mehreren in Bewegungsrichtung des zweiten Moduls hintereinander angeordneten wabenartigen Aussparungen ausgebildet sein, in welche die Sperrklinke in Abhängigkeit einer Ausfahrstellung in Richtung ihrer Wirkposition mit ihrer Rastklaue jeweils eingreift.

Das Rastelement mit den wabenartigen Aussparungen kann in einem günstigen Fertigungsprozess aus einem Strangpressprofil mit kanalartigen, mittels entsprechend geformter Kerne festgelegten Aussparungen derart hergestellt sein, dass ein scheibenartiger Bereich mit vordefinierter Breite unter einem in Bezug auf eine Längsachse der Aussparungen vordefinierten Ablängungswinkel, d. h. schräg, vom Strangpressprofil vorzugsweise mittels Sägen abgetrennt wird.

Ein derart hergestelltes Rastelement ist im Vergleich zu mit einem Zahnprofil ausgeführten Rastleisten einfacher und kostengünstiger herzustellen.

Zudem ist das Überrollschutzsystem dann im Bereich der Verriegelungsvorrichtung an verschiedene jeweils vorliegende Lastfälle auf einfache Art und Weise durch Veränderung der Dimensionierung der einzelnen Bauteile der Verriegelungsvorrichtung anpassbar, was bei herkömmlichen Überrollschutzsystemen aufgrund des komplexeren konstruktiven Aufbaus nur mit erheblich höherem Aufwand umsetzbar ist.

So besteht beispielsweise die Möglichkeit, das leistenförmige Rastelement der zweiten Rasteinrichtung mit mehreren nebeneinander angeordneten Aussparungsreihen auszuführen, in welche wiederum mehrere nebeneinander und untereinander angeordnete Rastklauen der Sperrklinke in Wirkposition der Verriegelungseinrichtung gleichzeitig in mehrere Aussparungen des Rastelementes eingreifen, wodurch im Bereich der Verriegelungsvorrichtung höhere bei einer Verunfallung des Fahrzeugs auf das Überrollschutzsystem einwirkende Kräfte abstützbar sind.

Insgesamt stellt die vorgeschlagene Verriegelungsvorrichtung eine konstruktiv einfache und kostengünstige Ausführung dar, da zu ihrer Realisierung keine Präzisionskomponenten erforderlich sind und somit wesentlich vereinfachte Fertigungsprozesse durchzuführen sind.

Das Kraftfahrzeug gemäß der Erfindung weist vorzugsweise für jeden Fahrzeugsitz eine Überrollschutz-Vorrichtung auf, welche unabhängig von der Überrollschutz-Vorrichtung eines anderen Sitzes angetrieben wird, so dass eine Verkantung des ausfahrbaren Moduls bei dessen Ausfahrbewegung und somit eine Beeinträchtigung der Funktionssicherheit oder gegebenenfalls zusätzliche erforderliche Synchronisationseinrichtungen vermieden werden können.

Zur Realisierung einer möglichst großen Durchladeöffnung ist es vorteilhaft, wenn die Überrollschutz-Vorrichtungen zweier Fahrzeugsitze einer Sitzreihe jeweils in entgegengesetzter Richtung im Wesentlichen außermittig zu dem zugeordneten Fahrzeugsitz angeordnet sind, das heißt, dass deren Komponenten überwiegend im Bereich einer einer Fahrzeugseite zugewandten Seite des betreffenden Fahrzeugsitzes angeordnet sind.

Im Rahmen der vorliegenden Erfindung kann die Fahrzeugquerwand sowohl eine an der Rohkarosserie des Fahrzeugs ausgebildete Wand sein als auch eine außerhalb des Fahrzeugs mit dem Überrollschutzsystem vorkonfektionierte Baueinheit bilden, die an dem Fahrzeugaufbau festlegbar ist. Die Befestigung dieser Baueinheit an dem Fahrzeugaufbau kann beispielsweise mittels Verschraubung an Aufnahmen an der Fahrzeugseite erfolgen.

Bei einer Weiterführung der Erfindung kann in die Fahrzeugquerwand bzw. in das Überrollschutzsystem auch ein Rückhaltegurtsystem mit Sicherheitsgurtführungen für wenigstens einen Sicherheitsgurt integriert sein. Die Komponenten eines Sicherheitsgurtsystems, wie z. B. ein Gurtaufroller und eine obere Sicherheitsgurtführung, können über entsprechende Aufnahmen problemlos in die Fahrzeugquerwand und in die Bauteile des Überrollschutzsystems integriert werden.

Des Weiteren kann die Baueinheit aus Fahrzeugquerwand und Überrollschutzsystem zusätzlich auch Sitzkomponenten, wie z. B. ein oberes und unteres Sitzlehnenlager, umfassen.

Weitere Vorteile und vorteilhafte Ausgestaltungen eines Kraftfahrzeug gemäß der Erfindung sind der Beschreibung, der Zeichnung und den Patentansprüchen entnehmbar.

Ein Ausführungsbeispiel einer Baugruppe eines erfindungsgemäß ausgestalteten Cabriolet-Fahrzeugs mit einer Fahrzeugquerwand und einem Überrollschutzsystem ist in der Zeichnung schematisch vereinfacht dargestellt und wird in der nachfolgenden Beschreibung näher erläutert.

### Es zeigt:

- Fig. 1: eine schematisierte Vorderansicht einer Fahrzeugquerwand eines Cabriolet-Fahrzeugs mit einem Überrollschutzsystem;
- Fig. 2: eine perspektivische Ansicht einer teilweise freigestellten Oberrollschutz-Vorrichtung des Überrollschutzsystems der Fig. 1;
- Fig. 3: eine ausschnittsweise dreidimensionale Ansicht eines Bereiches der Überrollschutz-Vorrichtung der Fig. 2 in Alleinstellung;
- Fig. 4: eine Rasteinrichtung einer Verriegelungsvorrichtung der Überrollschutz-Vorrichtung der Fig. 3;
- Fig. 5: einen Schnitt entlang der Linie A-A in Fig. 4;
- Fig. 6: eine zweite Ausführung der Verrieglungsvorrichtung und Komponenten des Antriebssystems in Alleinstellung;
- Fig. 7: eine Vorderansicht einer Haltevorrichtung für einen Überrollkörper der Überrollschutz-Vorrichtung der Fig. 1 bis Fig. 5 in einem verriegelten Ruhezustand;
- Fig. 8: eine dreidimensionale Darstellung der Halteeinrichtung der Fig. 7 in Ruheposition des Überrollkörpers; und
- Fig. 9: eine teilweise geschnittene Seitenansicht der Halteeinrichtung gemäß Fig. 7 und Fig. 8 nach einer Auslösung und Verlagerung des Überrollkörpers in dessen ausgefahrene Stützposition.

Die Figuren der Zeichnung zeigen jeweils in vereinfachter Darstellung einen Bereich einer Fahrzeugquerwand 10 eines an sich in üblicher Weise aufgebauten Cabriolet-Fahrzeugs, welches ein Überrollschutzsystem 11 aufweist, welches mit jeweils einer einem im Fond angeordneten Fahrzeugsitz 26, 28 zugeordneten Überrollschutz-Vorrichtung 2 bzw. 3 ausgebildet ist. Die identisch aufgebauten Überrollschutz-Vorrichtungen 2, 3 weisen jeweils ein karosseriefestes erstes Modul 4 und ein zwischen einer abgesenkten Ruhelage und einer erhöhten Stützlage verfahrbares zweites Modul 5 mit einem Überrollkörper 6 auf, wobei das zweite Modul 5 bei einer Verlagerungsbewegung an dem ersten Modul 4 geführt ist.

Des Weiteren weist jede Überrollschutz-Vorrichtung 2, 3 eine lösbare Halteeinrichtung 210 zum Halten des zweiten Moduls 5 mit dem Überrollkörper 6 in seiner Ruhelage, eine Verriegelungsvorrichtung 500, mittels der das zweite Modul 5 in einer von seiner Ruhelage abweichenden Position gegen einen in Richtung der Ruhelage wirkenden Kraftangriff selbsttätig abstützbar ist, und ein Antriebssystem 50 mit einem Federkraftspeicher 52, mittels dem das zweite Modul 5 in seiner Ruheposition vorgespannt und im Bedarfsfall in Richtung seiner Stützlage verlagerbar ist, auf.

Der Federkraftspeicher 52 des Antriebssystems 50 ist hier als eine Druckfeder ausgebildet, welche mit ihrem oberen Ende mit einem ersten Federteller 55 an dem Überrollkörper 6 abgestützt ist und mit ihrem unteren Ende mit einem zweiten, gegenüber einer Federführungsstange 53 gleitend gelagerten Federteller 56 an dem ersten Modul 5 abgestützt ist.

Bei einer hiervon abweichenden Ausführung kann der Federkraftspeicher auch als eine Zugfeder ausgebildet sein, welche beispielweise mit ihrem oberen Ende mit einer Federaufhängung an einer Federführungsstange, welche an dem Fahrzeugboden 7 oder einem anderen fahrzeugfesten Element abgestützt ist, verbunden ist und mit ihrem unteren Ende beispielsweise über einen Mitnehmer mit dem Überrollkörper wirkverbunden ist, so dass die in Ruhezustand des Überrollschutzsystems auf Zug vorgespannte Feder bei Aktivierung des Überrollschutzsystems und Freigabe des Überrollkörpers durch die Halteeinrichtung kontraktiert und dabei den Überrollkörper in Ausfahrrichtung mitnimmt.

Dabei ist die Feder 52 der betreffenden Überrollschutz-Vorrichtung 2, 3 im Inneren der hier doppelwandig mit einer vorderen, an einen Insassenraum grenzenden Wand 10A und einer beabstandet hierzu angeordneten hinteren, einem heckseitigen Stauraum zugewandten Wand 10B ausgeführten Fahrzeugquerwand 10 angeordnet und durchtritt die Fahrzeugquerwand 10 an einer Austrittsöffnung 25, welche in einer oberen, wenigstens annähernd horizontalen Begrenzungswand 24 der Fahrzeugquerwand 10 ausgebildet ist.

Der Überrollkörper 6 ist vorliegend kassettenartig ausgebildet, wobei eine vordere Wandung 6A des Überrollkörpers 6 an einer dem Insassenraum zugewandten Seite 20 der Fahrzeugquerwand 10 bzw. deren vorderer Wand 10A und eine hintere Wandung 6B des Überrollkörpers 6 an einer dem Insassenraum abgewandten Seite 22 der Fahrzeugquerwand 10 bzw. deren hinterer Wand 10B geführt ist, womit die Fahrzeugquerwand 10 das fahrzeugfeste erste Modul 5 bildet.

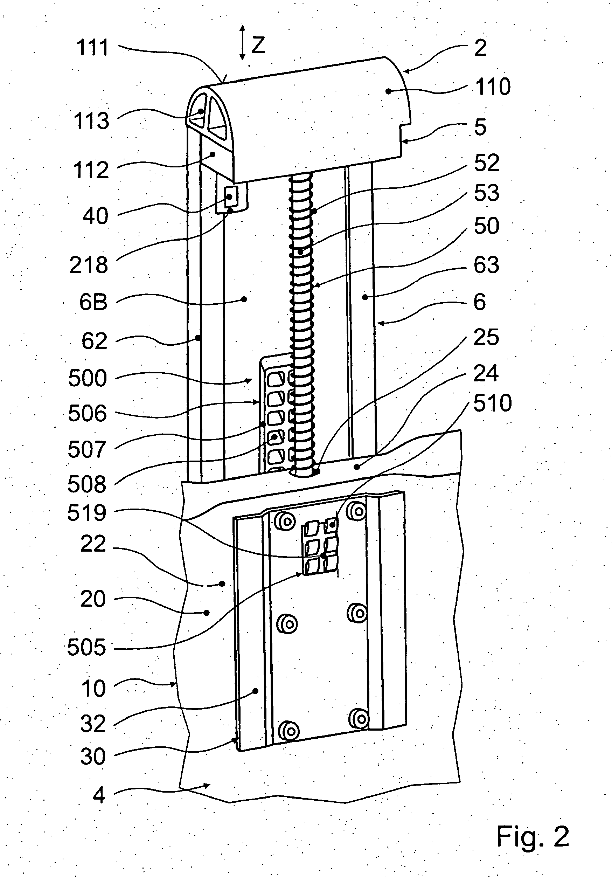

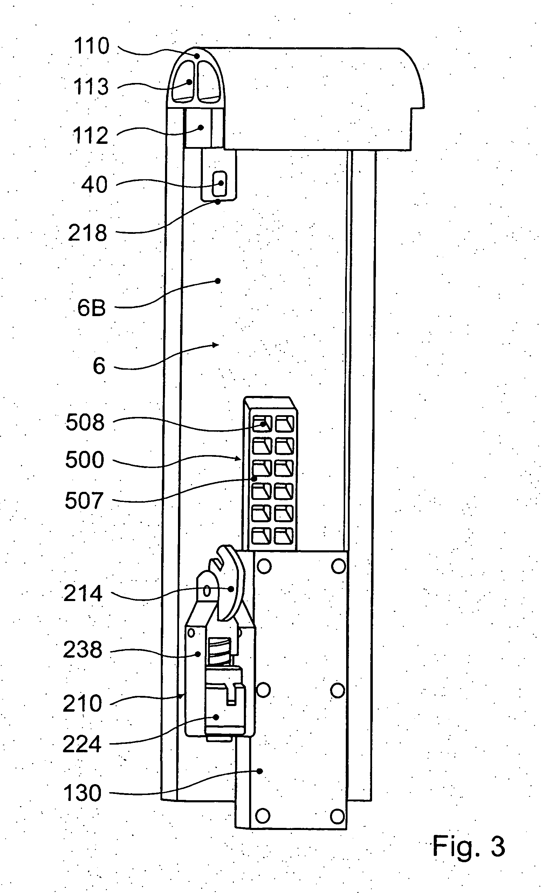

Wie insbesondere den Fig. 2, 3 und 5 zu entnehmen ist, ist an der vorderen Wand 10A und der hinteren Wand 10B der Fahrzeugquerwand 10 jeweils eine Führungseinrichtung 30 für die betreffende Wandung 6A bzw. 6B des Überrollkörpers 6 angeordnet, wobei die Führungseinrichtung bei der gezeigten Ausführung als ein an die Fahrzeugquerwand 10 angeschraubtes Führungsblech 30 mit beidseitigen, in Axialrichtung des Überrollkörpers 6 verlaufenden Führungsschienen 32 ausgebildet ist.

Die Führungsschienen 32 für den Überrollkörper 6 bzw. dessen Wandungen 6A, 6B sind an dem Führungsblech 30 als gebogene Bereiche ausgebildet, in denen das Führungsblech 30 von der Fahrzeugquerwand 10 beabstandet ist, so dass sich eine Hinterschneidung ergibt, welche zusammen mit der Fahrzeugquerwand 10 eine Art seitlich offene Nut bildet.

Die Wandungen 6A bzw. 6B des Überrollkörpers 6 sind korrespondierend an beiden Seitenrändern mit U-förmigen Bereichen 62, 63 ausgebildet, welche zum Hintergreifen der Führungsschienen 32 ausgelegt sind.

An ihrem oberen Ende sind die vordere Wandung 6A und die hintere Wandung 6B des Überrollkörpers 6, welche hier jeweils Strangpressprofil-Platten darstellen, miteinander über ein Brückenprofil 112 z. B. über eine Schraubverbindung fest miteinander verbunden. Oberhalb des den Überrollkörper 6 verstärkenden und als Abstandhalter dienenden Brückenprofils 112 ist als oberer Abschluss des Überrollkörpers 6 ein Prallelement 110 angeordnet, welches an der Oberseite eine halbzylindrisch gerundete Prallfläche 111 aufweist und als Strangpressprofil mit mehreren Hohlräumen 113 ausgeführt ist.

Die Fahrzeugquerwand 10 ist im Bereich der Überrollschutz-Vorrichtungen 2, 3 durch einen entsprechend gekrümmten Verlauf ihrer vorderen Wand 10A und ihrer hinteren Wand 10B in ihrem Gesamtquerschnitt derartig verjüngt, dass die betreffende Wandung 6A bzw. 6B des Überrollkörpers 6 annähernd bündig zu einem umgebenden Bereich der Fahrzeugquerwand 10 verläuft.

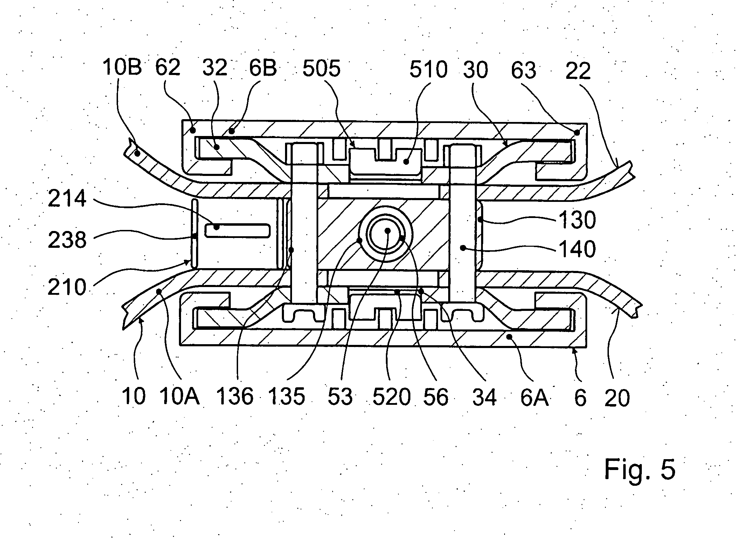

Wie insbesondere der Fig. 5 zu entnehmen ist, ist zur Verstärkung der Fahrzeugquerwand 10 im Bereich der Überrollschutz-Vorrichtungen 2, 3 zwischen der vorderen Wand 10A und der hinteren Wand 10B der Fahrzeugquerwand 10 ein überbrückendes Distanzbauteil 130 angeordnet. Dieses quaderförmige Distanzbauteil 130 ist ein Vollmaterial-Bauteil mit einer zentralen, parallel zur Ausfahrrichtung Z des Überrollkörpers 6 verlaufenden Axialbohrung 135, in der vorliegend der als Druckfeder ausgebildete Federkraftspeicher 52 des Antriebssystems 50 im Ruhezustand des Überrollschutzsystems 11 nahezu vollständig aufgenommen ist.

Die Feder 52 ist vorliegend an der Federführungsstange 53 zwischen den Federtellern 55, 56 geführt, jedoch ist es in einer vereinfachten Ausführung auch möglich, dass der Federkraftspeicher direkt auf einem Absatz des Distanzbauteils 130 abgestützt ist.

Des Weiteren weist das Distanzbauteil 130 Querbohrungen 136 zur Durchführung der die Führungsbleche 30 an der Fahrzeugquerwand 10 haltenden Schrauben 140.

Die Überrollschutz-Vorrichtungen 2, 3 sind bei allen gezeigten Ausführungen jeweils mit einer nicht näher dargestellten, in üblicher Art und Weise ausgeführten Crash-Sensorik des Fahrzeugs verbunden, wobei hierdurch die Halteeinrichtung 210 angesteuert wird, mittels der der Überrollkörper 6 entgegen der Kraft des Federkraftspeichers 52 in Ruhelage gehalten wird.

Bei Vorliegen eines Crash-Signals gibt die betreffende Halteeinrichtung 210 den Überrollkörper 6 frei, so dass der Überrollkörper 6 durch die Kraft des Federkraftspeichers 52 in seiner ausgefahrene obere Stützposition verlagert wird, in der er durch die Verriegelungseinrichtung 500 gegen ein Wiedereinfahren gesichert wird.

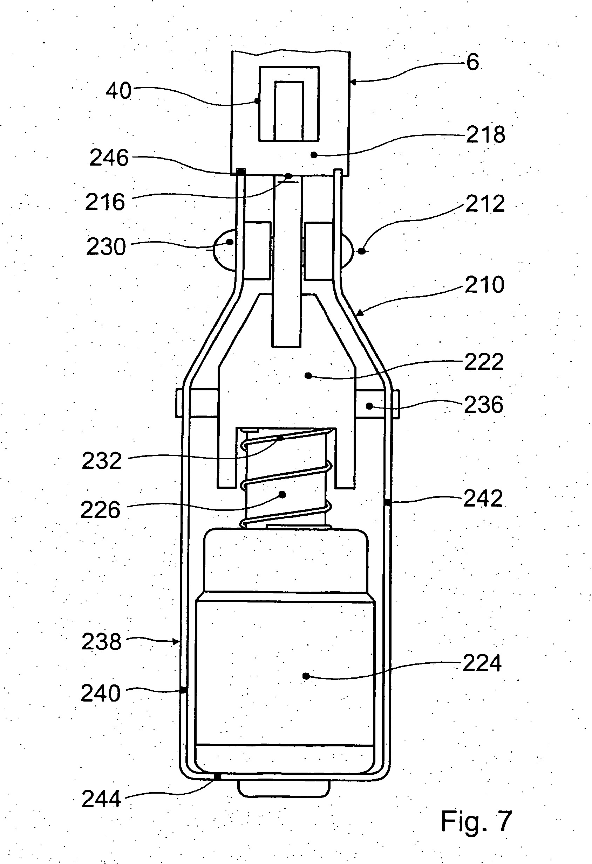

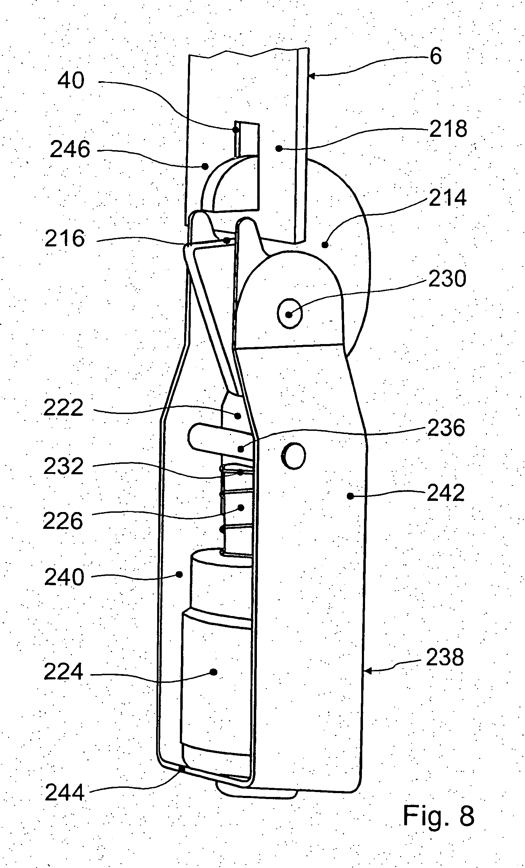

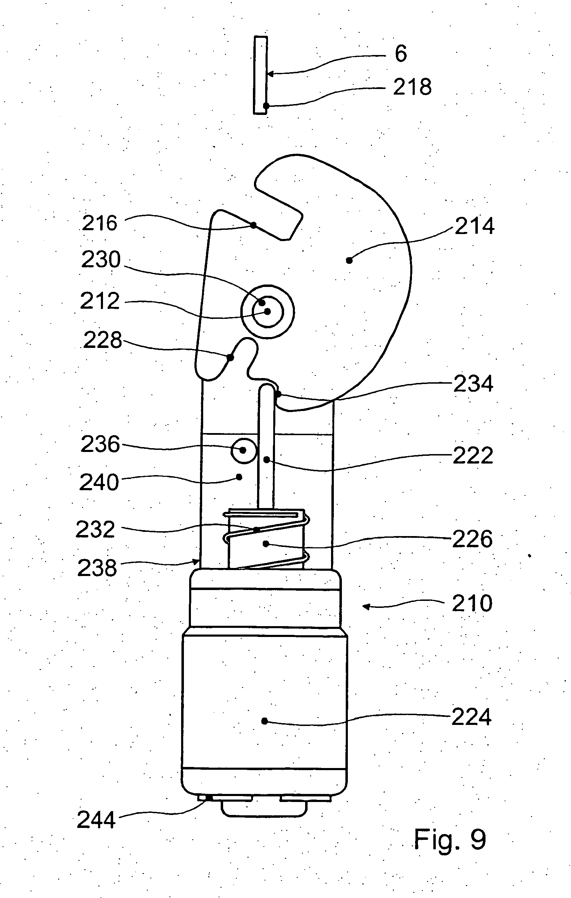

Die Fig. 7, Fig. 8 und Fig. 9 zeigen in vergrößertem Maßstab die bei der vorgestellten Ausführung verwendete Halteeinrichtung 210 zum Halten des Überrollkörpers 6.

Die Halteeinrichtung 210 umfasst ein um eine feste Drehachse 212 schwenkbar gelagertes Verriegelungselement 214, welches im Wesentlichen scheibenartig ausgebildet ist und an seinem Umfang einen Klinkenabschnitt 216 aufweist, welcher bei der gezeigten Ausführung als U-Ausnehmung ausgebildet ist und zum Zusammenwirken mit einem Verriegelungselement-Gegenkörper 218 an dem Überrollkörper 6 ausgelegt ist.

Der Verriegelungselement-Gegenkörper 218 ist bei der gezeigten Ausführung in einfacher Weise als Haltelasche unterhalb einer Ausnehmung 40 an dem Brückenprofil 112 ausgebildet.

Die Dimensionierung und Formgebung der Haltelasche 218 und der U-Ausnehmung des Klinkenabschnitts 216 ist derart aufeinander abgestimmt, dass die Haltelasche 218 bei einer Rotation des Verriegelungselements 214 um dessen Drehachse 212 problemlos aus dem Klinkenabschnitt 216 gleiten kann.

In alternativen Ausführungen kann statt der hier vorgesehenen Haltelasche auch ein Bolzen, ein Absatz an dem Überrollkörper oder ein geeignetes Hakenelement als Verriegelungselement-Gegenköper vorgesehen sein.

In der abgesenkten Ruheposition des Überrollkörpers 6 ist das Verriegelungselement 214 durch ein Sperrglied 222, welches mit einem Aktuator 224 zusammenwirkt, gegen eine die Halteeinrichtung 210 lösende Rotation gesichert. Das Sperrglied 222 ist vorliegend als ein auf einem zylindrischen, durch den Aktuator 224 axial beweglichen Kolben befestigtes, flaches, zungenartiges Blechelement ausgebildet.

In Ruheposition des Überrollkörpers 6 greift das Sperrglied 222 in eine umfangsseitige Ausnehmung 228 des scheibenartigen Verriegelungselements 214 ein, womit die Ausnehmung 228 eine Verriegelungsraste bildet, welche vorliegend in Ruheposition des Überrollkörpers 6 koaxial zu einer Längsachse des Sperrgliedes 222 und der Wirkrichtung des Aktuators 224, welche der Bewegungsrichtung des Überrollkörpers 6 entspricht, ausgerichtet ist und sich in Richtung eines die Drehachse 212 des Verriegelungselements 214 bildenden, exzentrisch angeordneten Bolzens 230 im Wesentlichen rechtwinklig zur Ausrichtung der U-förmigen Ausnehmung des Klinkenabschnitts 216 erstreckt.

Der Aktuator 224 wird bei einer von einer Sicherheitssensorik des Cabriolet-Fahrzeugs erkannten Unfallsituation von einem zugeordneten Steuergerät angesteuert, wobei der Aktuator 224 im Crash-Fall eine Zustandsänderung erfährt, welche eine translatorische Verschiebung des Sperrglieds 222 entgegen der Kraft einer Druckfeder 232 in Richtung des Aktuators 224 zur Folge hat. Das Sperrglied 222 wird durch diese translatorische Bewegung in Richtung des Aktuators 224 aus der umfangsseitigen Ausnehmung 228 an dem scheibenartigen Verriegelungselement 214 bis zu einem vordefinierten, beispielsweise als Anschlag vorgegeben Punkt herausgezogen, womit dieses in Folge der über die Haltelasche 218 des Überrollkörpers 6 ausgeübten Zugkraft eine Rotationsbewegung ausführt.

Zur Begrenzung dieser Rotationsbewegung ist am Umfang des scheibenartigen Verriegelungselementes 214 ein Anschlag 234 ausgebildet, an dem das bei Auslösung der Halteeinrichtung aus der Ausnehmung 228 zurückgezogene Sperrglied 222 nach einer den Klinkenabschnitt 216 aus Eingriff mit der Haltelasche 218 bringenden Rotation des Verriegelungselementes 214 zur Anlage kommt.

Bei der gezeigten Ausführung ist eine Verschwenkung des Verriegelungselements 214 um die Drehachse 212 um ca. 30° zur Auslösung der Halteeinrichtung 210 ausreichend. Folglich ist die Umfangskontur des Verriegelungselements 214 in einem Bereich von annähernd 30° in einem Bereich anschließend an die umfangsseitige Ausnehmung 228 entgegen der auslösesinnigen Drehrichtung des Verriegelungselements 214 radial zurückgenommen bis zu dem umfangsseitigen Anschlag 234.

Der Anschlag 234, der nach Auslösung der Halteeinrichtung 210 das scheibenartige Verriegelungselement 214 im Zusammenwirken mit dem Sperrglied 222 in Position hält, erleichtert bei einer eventuellen Fehlauslösung eine einfache Reversierung des Überrollschutzsystems. Die Reversierung erfolgt dabei auf einfache Weise durch eine Verdrehung des Verriegelungselementes 214 in sperrendem Sinne, bis der Klinkenabschnitt 216 wieder in Eingriff mit der Haltelasche 218 des in seine Ruheposition zurückverlagerten Überrollkörpers 6 gelangt. In dieser Position fluchtet die umfangsseitige Ausnehmung 228 mit dem Sperrglied 222, welches unter dem Druck der Druckfeder 232 in die umfangsseitige Ausnehmung 228 einrastet und das Verriegelungselement 214 gegen Rotation sichert.

Das Verriegelungselement 214 stellt eine Zweistufenscheibe dar, bei der die Anordnung und Dimensionierung der Ausnehmung 228 und des Anschlags 234 je nach Anordnung und Gestaltung des Aktuators 224 und des Sperrglieds 222 zu wählen sind.

In von der gezeigten Ausführung abweichenden Ausführungsvarianten kann beispielsweise vorgesehen sein, dass der Anschlag für das Sperrglied 222 an dem Verriegelungselement als ein Vorsprung an der Umfangskontur des Verriegelungselements ausgebildet ist, wobei der Anschlag auch als ein separates, an dem Verriegelungselement befestigtes Bauteil ausgeführt sein kann. Ebenfalls abweichend von dem gezeigten Ausführungsbeispiel können der vorgesehene Rotationswinkel des Verriegelungselementes zwischen der verriegelten und entriegelten Stellung und die Ausgestaltung des Stellglieds, welches beispielsweise auch ein Stift anstelle des gezeigten flachen Blechelementes sein kann, dem jeweiligen Anwendungsfall entsprechend gewählt werden.

Wie den Figuren der Zeichnung weiter zu entnehmen ist, ist seitlich des Sperrglieds 222 ein Widerlager 236 in Form eines Bolzens vorgesehen, welcher zur Aufnahme von Kräften dient, welche im gelösten Zustand der Halteeinrichtung 210 seitens des Verriegelungselements 214 und des Anschlags 234 auf das Sperrglied 222 seitlich ausgeübt werden. Mit Hilfe des Widerlagers 236 kann ein Verkippen des Sperrglieds 222 im gelösten Zustand der Halteeinrichtung 210 auch bei einer sehr langen Ausführung des Sperrglieds 222 vermieden werden.

Das Widerlager 236 ist wie der die Drehachse 212 bildende Bolzen 230 an einem ein Gehäuseelement darstellenden Grundkörper 238 der Halteeinrichtung 210 gelagert, wobei der Grundkörper 238 gegenüberliegende Seiten 240, 242 aufweist, zwischen denen der Bolzen 230 und das Widerlager 236 gelagert sind.

Bei der gezeigten Ausführung ist der Grundkörper 238 im Wesentlichen als ein U-Profil ausgebildet, welches z. B. ein umgeformtes Flachband sein kann. Der Grundkörper 238 weist vorliegend an seinem im Einbauzustand oberen Ende, d. h. an den freien Enden der Seiten 240, 242, jeweils eine rampenartige Führung 246 zum gesicherten Zuführen des Überrollkörpers 6 bzw. dessen Haltelasche 218 in den Eingriffsbereich mit dem Klinkenabschnitt 216 des Verriegelungselements 214 auf. Zwischen den die U-Schenkel des U-Profils bildenden Seiten 240, 242 des Grundkörpers 238 erstreckt sich eine Traverse 244, welche vorliegend als Sitz des Aktuators 224 genutzt wird.
Der gezeigte Grundkörper 238 bildet somit eine Art Systemkäfig, welcher vorteilhafterweise bei wesentlich einfacherer Ausgestaltung die Aufgaben eines bei bekannten Ausführungen häufig recht aufwändig ausgeführten Gehäuses erfüllt.

Der Aktuator 224 ist bei der Ausführung nach Fig. 7, Fig. 8 und Fig. 9 als ein elektromagnetischer Aktuator üblicher Bauweise ausgebildet, jedoch eignen sich auch nach einem anderen Wirkprinzip arbeitende Aktuatoren, wie z. B. piezoelektrische Aktuatoren, pyrotechnische Aktuatoren oder mit einem Schmelzeinsatz ausgestattete Aktuatoren, zur Anwendung bei der Halteeinrichtung 210.

In seiner einen Überlebensraum für die Fahrzeuginsassen bereitstellenden, ausgefahrenen Stützposition ist der Überrollkörper 6 durch die Verriegelungsvorrichtung 500 selbsttätig gesperrt, wobei die Verriegelungseinrichtung 500 gemäß den in den Figuren gezeigten Ausführungen wenigstens eine erste Rasteinrichtung 505 aufweist, die zum Abstützen des zweiten Moduls 5 mit einer zweiten Rasteinrichtung 506 in Wirkverbindung bringbar ist und eine Bewegung des Überrollkörpers 6 in Richtung seiner Stützlage zulässt.

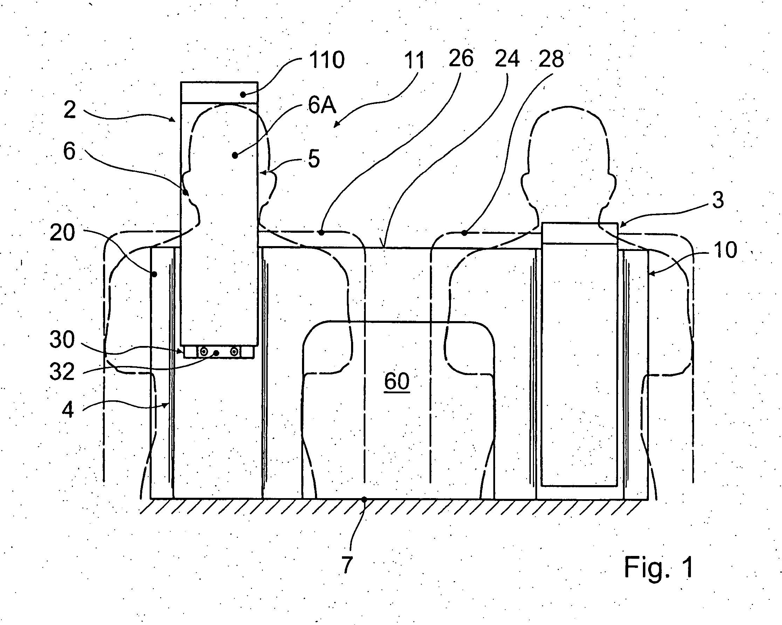

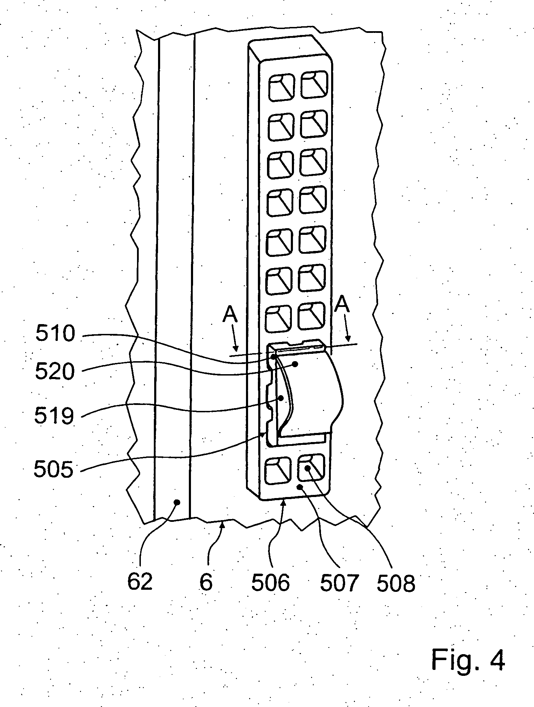

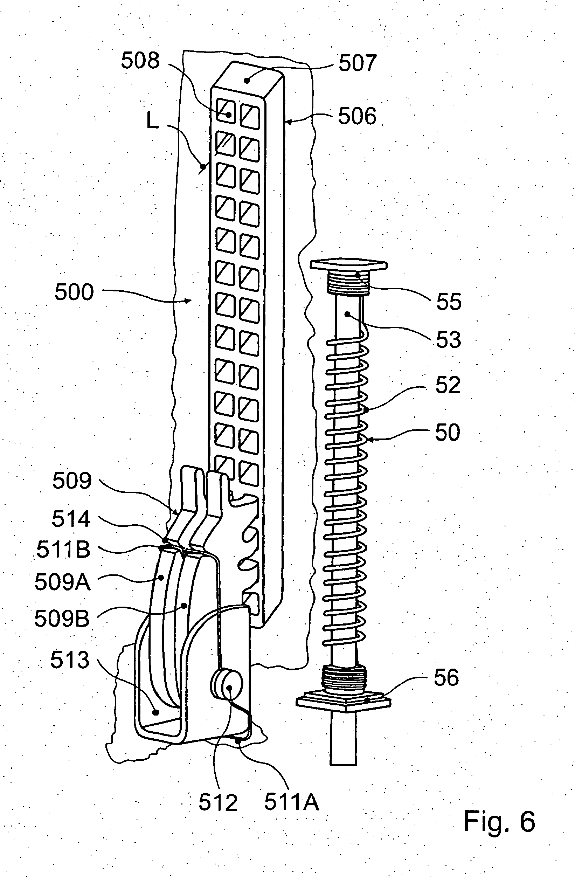

Die erste Rasteinrichtung 505 weist sowohl bei der Ausführung nach Fig. 1 bis Fig. 5 als auch bei der Ausführungsvariante nach Fig. 6 eine in Richtung ihrer Wirkposition angefederte Sperrklinke 519 bzw. 509 mit Rastklauen 510 auf, die mit einem Rastelement 507 der hier an dem Überrollkörper 6 angeordneten zweiten Rasteinrichtung 506 zusammenwirkt.

Bei der Ausführung nach Fig. 1 bis Fig. 5 ist die Sperrklinke 519 plattenartig als ein Strangpressprofil ausgebildet und in einer Ausnehmung 34 des Führungsblechs 30 schwimmend gelagert, d. h. die Rastklinke 519 ist nicht mit Befestigungsmitteln an den umgebenden Bauteilen fixiert, sondern als ein schwimmendes Gleitstück formschlüssig hieran gehalten.

Die Rastklinke 519 ist dabei mit den Rastklauen 510 durch eine Federeinrichtung 520, welche hier eine Blattfeder darstellt, angefedert und axial translatorisch entgegen der zweiten Rasteinrichtung 506 beweglich gelagert. Die auf der den Rastklauen 510 abgewandten Seite der Rastklinke 519 angeordnete Blattfeder 520 greift in einen Schlitz des Rastelementes oben ein und ist an dem Distanzelement 130 abgestützt.

Das ebenfalls aus einem Strangpressprofil hergestellte und wenigstens annähernd leistenförmig ausgeführte Rastelement 507 der zweiten Rasteinrichtung 506 ist mit mehreren in Bewegungsrichtung Z des zweiten Moduls 5 hintereinander angeordneten, wabenartigen Aussparungen 508 ausgeführt, in welche die Sperrklinke 519 bzw. 509 der ersten Rasteinrichtung 505 in Abhängigkeit einer Ausfahrstellung des Überrollkörpers 6 zu dessen Arretierung mit mehreren Rastklauen 510 eingreift.

Das Rastelement 507 ist vorliegend aus einem Strangpressprofil mit kanalartigen in Längsrichtung des Pressstranges verlaufenden Aussparungen hergestellt und stellt einen scheibenartigen Bereich mit vordefinierter Breite dar, der unter einem in Bezug auf eine Längsachse L der Aussparungen 508 vordefinierten Ablängungswinkel schräg vom Strangpressprofil durch Sägen abgetrennt ist. Die Breite bzw. Tiefe des Rastelements 507 kann je nach Anwendungsfall bis hin zu einer quader- oder würfelförmigen Geometrie des Rastelements 507 variieren.

Die Aussparungen 508 des Rastelementes 507 sind vorliegend im Querschnitt rechteckig ausgebildet, wobei es selbstverständlich im Ermessen des Fachmannes liegt, den Querschnitt der Aussparungen mit einer beliebigen anderen Querschnittsform, wie einem kreisförmigen oder ovalen Querschnitt, auszuführen.

Die Ausführung der Verriegelungsvorrichtung nach Fig. 6 unterscheidet sich von der ersten Ausführung durch eine modifizierte Sperrklinke 509.

Die Sperrklinke 509 ist in Richtung der Wirkposition, in der die Rastklauen 510 in die Aussparungen 508 eingreifen, über eine Federeinrichtung 511 angefedert und über einen Lagerbolzen 512 karosseriefest am karosseriefesten Modul 4 bzw. der Fahrzeugquerwand 10 drehbar gelagert, wobei eine analoge Anordnung wie bei der Ausführung nach Fig. 1 bis Fig. 5 möglich ist.

Die Federeinrichtung 511 ist mit einem ersten Endbereich 511A in Einbaulage in Anlage mit einem karosseriefesten Bauteil des ersten Moduls 4 und mit einem gegenüberliegenden zweiten Federende 511B in einer Ausnehmung 514 der Sperrklinke 509 eingreifend angeordnet.

Der Lagerbolzen 512 ist beidendig in einem U-förmig ausgeführten Halteelement 513 angeordnet und wird über die vorliegend als Drahtfeder ausgeführte Federeinrichtung 511, die eine Sicherung für den Lagerbolzen 512 darstellt, in Einbaulage gesichert bzw. gehalten. Das eine Art Haltebügel oder Käfig darstellende Halteelement 513 ist fest mit dem ersten Modul 4 verbunden und somit karosserieseitig festgelegt, wodurch in Abstützlage des Überrollkörpers 6 angreifende Kräfte über das Halteelement 513 in das erste Modul 4 einleitbar und von dort in der Fahrzeugkarosserie in gewünschtem Umfang abstützbar sind.

Bei dem in den Figuren dargestellten Ausführungsbeispiel ist die Sperrklinke 509 mit zwei zueinander beabstandet parallel auf dem Lagerbolzen 512 angeordneten Sperrklinkenscheiben 509A, 509B ausgebildet, die jeweils drei in Bewegungsrichtung hintereinander angeordnete Rastklauen 510 aufweisen und die in Wirkposition der Sperrklinke 509 jeweils in eine von mehreren in einer Reihe nebeneinander und in Reihen untereinander angeordneten Aussparungen 508 des Rastelementes 507 eingreifen.

Dazu sind die Rastklauen 510 der Sperrklinkenscheiben 509A und 509B, welche jeweils in einer senkrecht zur Bewegungsrichtung des Überrollkörpers 6 verlaufenden Reihe angeordnet sind, um wenigstens eine Stegbreite zwischen zwei Aussparungen 508 des Rastelementes 507 einer Reihe, die quer zur Bewegungsrichtung Z des Rastelementes 507 verläuft und mit einer Reihe der Rastklauen 510 korrespondiert, zueinander beabstandet angeordnet.

Die Sperrklinke 509 bzw. deren Sperrklinkenscheibe 509A und 509B sind ebenfalls aus einem kostengünstig herstellbaren Strangpressprofil gefertigt und bei dem dargestellten Ausführungsbeispiel mit gleich bleibender Scheibenbreite ausgeführt, wobei es bei einem weiteren Ausführungsbeispiel vorgesehen sein kann, dass die Sperrklinkenscheiben mit einem gegenüber dem restlichen Scheibenbereich verbreiterten Lagerhülsenbereich ausgebildet sind. Dabei kann der Lagerhülsenbereich jeweils durch eine in einer Bohrung einer Sperrklinkenscheibe angeordnete Lagerhülse ausgeführt sein.

Die wabenartigen Aussparungen 508 des Rastelementes 507 verlaufen von der der Sperrklinke 509 zugewandten Seite des Rastelementes 507 in Richtung der der Sperrklinke 509 abgewandten Seite des Rastelementes 507 in Bezug auf die Bewegungsrichtung Z des ausfahrbaren Überrollkörpers 6 in Richtung der Stützlage Überrollkörpers 6 schräg ansteigend und stellen somit für die Rastklauen 510 der Sperrklinke 509 eine derartige Hinterschneidung dar, dass diese in Abstützlage des Überrollkörpers 6 sicher mit dem Rastelement 507 einrasten, womit der Überrollkörpers 6 mit hoher Sicherheit in einer die Fahrzeuginsassen eines Fahrzeugs schützenden Stützposition gehalten wird.

Die schräge Ausführung der kanalförmigen Aussparungen 508 des Rastelementes 507 führt auch hier bei einem Ausfahren des Überrollkörpers 6 von seiner Ruheposition in Richtung seiner Stützposition, bei dem die Rastklauen 510 aufgrund entsprechend geformter Oberflächen gegen die Federkraft der Federeinrichtung 511 an dem Rastelement 507 abgleiten, ohne dass die Rasteinrichtungen 505 und 506 miteinander verrasten, zu einer Reduzierung der zwischen der Sperrklinke 509 und dem Rastelement 507 auftretenden Reibungskräfte, so dass eine Relativbewegung zwischen dem zweiten Modul 5 und dem ersten Modul 4 nicht behindert wird.

Bei der gezeigten Ausführung sind die Überrollschutz-Vorrichtungen 2, 3 zweier Fahrzeugsitze 26, 28 einer Sitzreihe annähernd mittig zu den Fahrzeugsitzen 26, 28 angeordnet, jedoch können diese auch in entgegengesetzter Richtung im Wesentlichen außermittig zu dem zugeordneten Fahrzeugsitz angeordnet sein, so dass eine Durchladeöffnung 60 zwischen den Überrollschutz-Vorrichtungen 2, 3, mittels der sperrige Güter von einem heckseitigen Aufnahmeraum bzw. Kofferraum in den Fahrzeuginnenraum geführt werden können, bei Bedarf großzügiger gestaltet und hinsichtlich ihrer Größe und Geometrie an die jeweils vorliegenden Verhältnisse angepasst werden kann.

Die beschriebene Bauteilgruppe kann insgesamt ein Multifunktionsmodul darstellen, welches die Funktionalitäten einer Überrollschutz-Vorrichtung, einer Durchladeöffnung, einer Fahrzeugquerversteifung, einer Rückhaltegurtaufnahme und einer Sitzbefestigung verbinden kann, wobei das gesamte Multifunktionsmodul gegebenenfalls in seiner vorgeschlagenen Kompaktbauweise separat außerhalb des Fahrzeugs komplettiert und in ein Fahrzeug zur Endmontage eingesetzt werden kann.

Neben der Einbindung der oben genannten Funktionalitäten ist es auch denkbar, dass die Baugruppe Teil eines Verdecks eines Cabriolet-Fahrzeugs ist bzw. dass ein Verdeckgestänge an die die Überrollschutz-Vorrichtungen aufweisende Bauteilgruppe angebunden ist.

Die Zuordnung der einzelnen beschriebenen Komponenten zu den jeweils gezeigten Ausführungsbeispielen ist nur beispielhaft, so dass eine beliebige Kombination der beschriebenen Komponenten und deren Zusammenfügen möglich ist.

## Patentansprüche

1. Kraftfahrzeug mit einem Überrollschutzsystem (11), bestehend aus wenigstens einer im Bereich einer Fahrzeugquerwand (10) angeordneten Überrollschutz-Vorrichtung (2, 3) für wenigstens einen Fahrzeugsitz (26, 28)
- mit einem karosseriefest angeordneten ersten Modul (4) mit Führungseinrichtungen (25, 30, 35) für ein hierin zwischen einer abgesenkten Ruhelage und einer erhöhten Stützlage verfahrbares zweites Modul (5);
- mit einer lösbare Halteeinrichtung (210) zum Halten des zweiten Moduls (5) in seiner Ruhelage;
- mit einer Verriegelungsvorrichtung (500), mittels der das zweite Modul (5) in einer von seiner Ruhelage abweichenden Position gegen einen in Richtung der Ruhelage wirkenden Kraftangriff selbsttätig abstützbar ist; und
- mit einem Antriebssystem (50) mit einem Federkraftspeicher (52), mittels dem das zweite Modul (5) in seiner Ruheposition vorgespannt und im Bedarfsfall in Richtung seiner Stützlage verlagerbar ist, wobei
das ausfahrbare zweite Modul (5) mit einem kassettenartigen Überrollkörper (6) ausgebildet ist, **dadurch gekennzeichnet, dass** eine vordere Wandung (6A) des Überrollkörpers (6) an einer einem Insassenraum zugewandten Seite (20) der Fahrzeugquerwand (10) und eine hintere Wandung (6B) des Überrollkörpers (6) an einer einem Insassenraum abgewandten Seite (22) der Fahrzeugquerwand (10) geführt ist.

2. Kraftfahrzeug nach Anspruch 1,
**dadurch gekennzeichnet,**
**dass** die Fahrzeugquerwand (10) doppelwandig mit einer vorderen Wand (10A) und einer hinteren Wand (10B) ausgeführt ist.

3. Kraftfahrzeug nach Anspruch 1 oder 2,
**dadurch gekennzeichnet,**
**dass** an der Fahrzeugquerwand (10) eine Führungseinrichtung (30) mit wenigstens einer Führungsschiene (32) für die betreffende Wandung (6A, 6B) des Überrollkörpers (6) angeordnet ist.

4. Kraftfahrzeug nach Anspruch 3,
**dadurch gekennzeichnet,**
**dass** die Führungseinrichtung als Führungsblech (32), welches ein separates, an der Fahrzeugquerwand (10) befestigtes Bauteil darstellt, ausgebildet ist, wobei die Führungsschienen (32) im Einbauzustand von der Fahrzeugquerwand (10) weggebogte Bereiche darstellen.

5. Kraftfahrzeug nach Anspruch 4,
**dadurch gekennzeichnet,**
**dass** die Wandung (6A, 6B) des Überrollkörpers (6) U-förmige Bereiche (62, 63) aufweist, welche zum Hintergreifen der Führungsschienen (32) ausgelegt sind.

6. Kraftfahrzeug nach einem der Ansprüche 1 bis 5,
**dadurch gekennzeichnet,**
**dass** die Fahrzeugquerwand (10) im Bereich der Überrollschutz-Vorrichtung (2, 3) eine derartige Querschnittsverjüngung aufweist, dass die betreffende Wandung (6A, 6B) des Überrollkörpers (6) wenigstens annähernd bündig zu einem umgebenden Bereich der Fahrzeugquerwand (10) angeordnet ist.

7. Kraftfahrzeug nach einem der Ansprüche Anspruch 1 bis 6,
**dadurch gekennzeichnet,**
**dass** am oberen Ende des Überrollkörpers (6) ein Prallelement (110) mit einer gerundeten Prallfläche (111) und vorzugsweise mit wenigstens einem Hohlraum (113) ausgebildet ist.

8. Kraftfahrzeug nach Anspruch 7,
**dadurch gekennzeichnet,**
**dass** im Bereich des Prallprofils (110) ein verstärkendes Brückenprofil (112) zwischen den Wandungen (6A, 6B) des Überrollkörpers (6) angeordnet ist.

9. Kraftfahrzeug nach Anspruch 8,
**dadurch gekennzeichnet,**
**dass** an dem Brückenprofil (112) eine Haltelasche (218) zum Zusammenwirken mit der lösbaren Halteeinrichtung (210) angeordnet ist.

10. Kraftfahrzeug nach einem der Ansprüche 1 bis 9,
**dadurch gekennzeichnet,**
**dass** der Federkraftspeicher (52) im Inneren der Fahrzeugquerwand (10) angeordnet ist und die Fahrzeugquerwand (10) an einer oberen horizontalen Begrenzungswand (24) an einer Austrittsöffnung (25) durchtritt.

11. Kraftfahrzeug nach einem der Ansprüche 1 bis 10,
**dadurch gekennzeichnet,**
**dass** die lösbare Halteeinrichtung (210) ein um eine feste Drehachse (212) schwenkbar gelagertes Verriegelungselement (214), welches einen Klinkenabschnitt (216) zur Wirkverbindung mit einem an dem Überrollkörper (6) angeordneten Verriegelungselement-Gegenkörper (218) in Ruheposition des Überrollkörpers (6) aufweist, umfasst, wobei das Verriegelungselement (214) in Ruheposition durch ein Sperrglied (222) eines Aktuators (224) gegen eine die Halteeinrichtung (210) lösende Rotation gesichert ist.

12. Kraftfahrzeug nach Anspruch 11,
**dadurch gekennzeichnet,**
**dass** das Verriegelungselement (214) scheibenartig ausgebildet ist, mit einer umfangsseitigen Ausnehmung (228), in die das Sperrglied (222) in Ruheposition eingreift, und mit einem umfangsseitigen Anschlag (234), an dem das zur Überführung des Überrollkörpers (6) in dessen Stützposition durch den Aktuator (224) aus der Ausnehmung (228) zurückgezogene Sperrglied (222) nach einer den Klinkenabschnitt (216) aus Eingriff mit dem Verriegelungs-Gegenkörper (218) bringenden Rotation des Verriegelungselementes (214) anliegt.

13. Kraftfahrzeug nach einem der Ansprüche 11 oder 12,
**dadurch gekennzeichnet,**
**dass** das Sperrglied (222) durch den Aktuator (224) in Axialrichtung linear bewegbar ist, wobei das Sperrglied (222) mittels einer Feder (232) entgegen dem Verriegelungselement (214) vorgespannt ist.

14. Kraftfahrzeug nach einem der Ansprüche 11 bis 13,
**dadurch gekennzeichnet,**
**dass** die Drehachse (212) des Verriegelungselementes (214) durch einen Bolzen (230) gebildet wird, welcher an gegenüberliegenden Seiten (240, 242) eines Grundkörpers (238) gelagert ist, wobei die Seiten (240, 242) des Grundkörpers (238) durch eine Traverse (244) miteinander verbunden sind, welche einen Sitz für den Aktuator (224) bildet.

15. Kraftfahrzeug nach einem der Ansprüche 1 bis 14,
**dadurch gekennzeichnet,**
**dass** die Verriegelungsvorrichtung (500) eine erste Rasteinrichtung (505) aufweist, die zum Abstützen des zweiten Moduls (5) mit einer zweiten Rasteinrichtung (506) in Wirkverbindung bringbar ist, eine Bewegung des zweiten Moduls (5) ausgehend von seiner Ruhelage in Richtung seiner Stützlage zulässt und eine in Richtung seiner Wirkposition angefederte, an dem ersten Modul (4) oder dem zweiten Modul (5) gelagerte Sperrklinke (509, 519) mit wenigstens einer Rastklaue (510) aufweist, die mit einem Rastelement (507) der an dem jeweils anderen Modul (5, 4) angeordneten zweiten Rasteinrichtung (506) zusammenwirkt.

16. Kraftfahrzeug nach Anspruch 15,
**dadurch gekennzeichnet,**
**dass** das Rastelement (507) der zweiten Rasteinrichtung (506) aus einem Strangpressprofil hergestellt und wenigstens annähernd leistenförmig ausgeführt ist und mit mehreren in Bewegungsrichtung des zweiten Moduls (5) hintereinander angeordneten wabenartigen Aussparungen (508) ausgebildet ist, in welche die Sperrklinke (509) in Abhängigkeit einer Ausfahrstellung des zweiten Moduls (5) in ihrer Wirkposition mit ihrer wenigstens einen Rastklaue (510) jeweils eingreift.

17. Kraftfahrzeug nach einem der Ansprüche 15 oder 16,
**dadurch gekennzeichnet,**
**dass** die Sperrklinke (519) plattenartig ausgebildet ist und durch eine Federeinrichtung.(520), insbesondere eine Blattfeder angefedert und axial translatorisch entgegen der zweiten Rasteinrichtung (506) beweglich gelagert ist.

18. Kraftfahrzeug nach einem der Ansprüche 15 oder 16,
**dadurch gekennzeichnet,**
**dass** die Sperrklinke (509) drehbar entgegen der zweiten Rasteinrichtung (506) gelagert ist.

19. Kraftfahrzeug nach einem der Ansprüche 1 bis 18,
**dadurch gekennzeichnet,**
**dass** zwischen den Überrollschutz-Vorrichtungen (2, 3) zweier Fahrzeugsitze (26, 28) eine Durchladeöffnung (60) angeordnet ist.

20. Kraftfahrzeug nach einem der Ansprüche 1 bis 19,
**dadurch gekennzeichnet,**
**dass** die Überrollschutz-Vorrichtungen (2, 3) zweier Fahrzeugsitze (26, 28) einer Sitzreihe jeweils in entgegengesetzter Richtung im Wesentlichen.außermittig zu dem zugeordneten Fahrzeugsitz (26, 28) angeordnet sind.

## Claims

1. A motor vehicle with a rollover protection system (11) comprising at least one rollover protection device (2, 3) for at least one vehicle seat (26, 28), said rollover protection device being mounted with respect to a transverse wall (10) of the vehicle and including
- a first module (4) mounted to the vehicle body and comprising guide devices (25, 30, 35) for a second module (5), said second module (5) being movable within the guide devices (25, 30, 35) between a lowered rest position and an elevated support position;
- a releasable holding device (210) for retaining the second module (5) in its rest position;
- a locking device (500) by means of which the second module (5) can be automatically supported in a position deviating from its rest position against a force acting in the direction of the rest position,
and
- a drive system (50) having a spring-force accumulator (52) by means of which the second module (5) is biased in its rest position and by means of which it can be displaced, if necessary, in the direction of its support position, wherein
the deployable second module (5) is desigend with a cassette-like rollover element (6),
**characterized in that** a front wall (6A) of the rollover element (6) is guided on a side (20) of the transverse wall (10) of the vehicle facing the passenger compartment, and a rear wall (6B) of the rollover element (6) is guided on a side (22) of the transverse wall (10) of the vehicle facing away from the passenger compartment.

2. Motor vehicle according to claim 1,
**characterized in that**
the transverse wall (10) of the vehicle has a double-wall design including a front wall (10A) and a rear wall (10B).

3. Motor vehicle according to claim 1 or 2,
**characterized in that**
a guide device (30) having at least one guide rail (32) for the corresponding wall (6A, 6B) of the rollover element (6) is mounted to the transverse wall (10) of the vehicle.

4. Motor vehicle according to claim 3,
**characterized in that**
the guide means is provided as a guide plate (32) constituting a separate structural component which is mounted to the transverse wall (10) of the vehicle, wherein the guide rails (32) represent areas biased away from the transverse wall (10) of the vehicle in the installed state.

5. Motor vehicle according to claim 4,
**characterized in that**
the walls (6A, 6B) of the rollover element (6) include U-shaped areas (62, 63) engageable with the guide rails (32).

6. Motor vehicle according to any one of claims 1 to 5,
**characterized in that**
the transverse wall (10) of the vehicle has a cross-section tapering in the area of the rollover protection device (2, 3), so that the corresponding wall (6A, 6B) of the rollover element (6) is arranged at least nearly flush with a surrounding area of the transverse wall (10) of the vehicle.

7. Motor vehicle according to any one of claims 1 to 6,
**characterized in that**
an impact element (110) comprising at least one rounded impact surface (111) and preferably at least one cavity (113) is formed at the upper end of the rollover element (6).

8. Motor vehicle according to claim 7,
**characterized in that**
a reinforcing bridge (112) is disposed in the area of the impact profile (110) between the walls (6A, 6B) of the rollover element (6).

9. Motor vehicle according to claim 8,
**characterized in that**
a retaining bracket (218) is arranged on the bridge profile (112) so as to cooperate with the releasable holding means (210).

10. Motor vehicle according to any one of claims 1 to 9,
**characterized in that**
the spring-force accumulator (52) is disposed within the transverse wall (10) of the vehicle, and the transverse wall (10) of the vehicle passes through an outlet opening (25) at an upper horizontal limitation wall (24).

11. Motor vehicle according to any one of claims 1 to 10,
**characterized in that**
the releasable holding device (210) includes a locking element (214) pivotably mounted about a fixed axis of rotation (212) and including a detent section (216) which, when the rollover element (6) is in its rest position, cooperates with a locking element counter body (218) arranged on the rollover element (6), wherein the locking element (214) is secured, by a blocking element (222) of an actuator (224) against rotation that releases the holding device (210) when the rollover element (6) is in the rest position.

12. Motor vehicle according to claim 11,
**characterized in that**
the locking element (214) is a disk comprising a peripheral recess (228) in which the blocking element (222) engages in the rest position, and comprising a peripheral stop (234) supporting the blocking element (222), when the blocking element (222) has been retracted from the recess (228) by the actuator (224) to transfer the rollover element (6) to its support position after the locking element (214) has been rotated so as to disengage the detent section (216) from the locking counter body (218).

13. Motor vehicle according to any one of claims 11 or 12,
**characterized in that**
the blocking element (222) is linearly movable in an axial direction by the actuator (224) and is biased against the locking element (214) by a spring (232).

14. Motor vehicle according to any one of claims 11 to 13,
**characterized in that**
the axis of rotation (212) of the locking element (214) is formed by a pin (230) supported on opposite sides (240, 242) of a base element (238), said sides (240, 242) of the base element (238) being connected to each other by a cross arm (244) that forms a seat for the actuator (224).

15. Motor vehicle according to any one of claims 1 to 14,
**characterized in that**
the locking device (500) has a first ratchet device (505) operatively connectable to a second ratchet device (506) to support the second module (5), permits movement of the second module (5) from the rest position, in the direction of the support position, and comprises a detent (509, 519) which is spring-loaded in the direction of the operative position of the second module (5), said detent (509, 519) being supported on the first module (4) or on the second module (5) and comprising at least one locking claw (510) that cooperates with a lock element (507) of the second ratchet device (506) provided on the respective other module (5, 4).

16. Motor vehicle according to claim 15,
**characterized in that**
the lock element (507) of the second ratchet device (506) is produced from an extruded profile and is at least approximately strip-like in form and is provided with a plurality of honey comb-like recesses (508) arranged in sequence in the direction of movement of the second module (5), wherein the detent (509) respectively engages at least one of the plurality of recesses (508) with the at least one locking claw (510) as a function of a deployment position of the second module (5) when the detent (509) is in it operative position.

17. Motor vehicle according to any one of claims 15 or 16,
**characterized in that**
the detent (519) is designed as a plate biased by a spring device (520), in particular a leaf spring, and is supported so as to be movable in an axially translatory motion counter to the second ratchet device (506).

18. Motor vehicle according to any one of claims 15 or 16,
**characterized in that**
the detent (509) is mounted to enable rotation against the second ratchet device (506).

19. Motor vehicle according to any one of claims 1 to 18,
**characterized in that**
a passage opening (60) is disposed between the rollover protection devices (2, 3) of two vehicle seats (26, 28).

20. Motor vehicle according to any one of claims 1 to 19,
**characterized in that**
the rollover protection devices (2, 3) of two vehicle seats (26, 28) of a row of seats are each arranged in opposite directions, essentially off-center with respect to the corresponding vehicle seat (26, 28).

## Revendications

1. Véhicule automobile comprenant un système de protection au retournement (11), consistant en au moins un dispositif de protection au retournement (2, 3) disposé dans la zone d'une paroi transversale de véhicule (10) pour au moins un siège de véhicule (26, 28), comprenant
- un premier module (4) monté fixe sur la carrosserie présentant des dispositifs de guidage (25, 30, 35) destinés à un deuxième module (5) mobile dans ceux-ci entre une position de repos abaissée et une position d'appui relevée,
- un dispositif support amovible (210) pour maintenir le deuxième module (5) dans sa position de repos ;
- un dispositif de verrouillage (500) au moyen duquel le deuxième module (5) peut être automatiquement contraint à l'encontre d'une force agissant vers le sens de la position de repos dans une position différente de celle-ci ;
- un système d'entraînement (50) comprenant un accumulateur d'énergie élastique (52), au moyen duquel le deuxième module (5) est précontraint dans sa position de repos et peut être amené en direction de sa position d'appui en cas de besoin, le deuxième module (5) mobile étant conçu pour comporter un corps de sécurité (6) en forme de châssis,
**caractérisé en ce qu'**une paroi avant (6A) du corps de sécurité (6) est guidée sur un côté (20) de la paroi transversale (10) du véhicule tournée vers l'espace pour un occupant et une paroi arrière (6B) du corps de sécurité (6) est guidée sur un côté (22) de la paroi transversale (10) du véhicule détournée de l'espace pour un occupant.

2. Véhicule automobile selon la revendication 1, **caractérisé en ce que** la paroi transversale de véhicule (10) est réalisée en double paroi comprenant une paroi avant (10A) et une paroi arrière (10B).

3. Véhicule automobile selon la revendication 1 ou 2, **caractérisé en ce que** sur la paroi transversale de véhicule (10) est disposé un dispositif de guidage (30) comprenant au moins un rail de guidage (32) pour la paroi (6A, 6B) concernée du corps de sécurité (6).

4. Véhicule automobile selon la revendication 3, **caractérisé en ce que** le dispositif de guidage est réalisé sous la forme d'une tôle de guidage (32) qui présente un élément de construction séparé, fixé à la paroi transversale de véhicule (10), les rails de guidage (32) présentant dans l'état encastré des zones éloignées par courbure de la paroi transversale de véhicule (10).

5. Véhicule automobile selon la revendication 4, **caractérisé en ce que** la paroi (6A, 6B) du corps de sécurité (6) présente des zones (62, 63) en forme de "U", prévues pour le maintien des rails de guidage (32).

6. Véhicule automobile selon l'une quelconque des revendications 1 à 5, **caractérisé en ce que** la paroi transversale de véhicule (10) présente dans la zone du dispositif de protection au retournement (2, 3) une réduction de section telle que la paroi (6A, 6B) concernée du corps de sécurité (6) est disposée au moins sensiblement coplanaire avec une zone environnante de la paroi transversale de véhicule (10).

7. Véhicule automobile selon l'une quelconque des revendications 1 à 6, **caractérisé en ce qu'**à l'extrémité supérieure du corps de sécurité (6) est conformé un élément de choc (110) présentant une surface de choc (111) arrondie et de préférence au moins un espace creux (113).

8. Véhicule automobile selon la revendication 7, **caractérisé en ce que** dans la zone du profil de choc (110) est disposé un profil de jonction (112) entre les parois (6A, 6B) du corps de sécurité (6).

9. Véhicule automobile selon la revendication 8, **caractérisé en ce que** sur le profil de jonction (112) est disposé un collier de maintien (218) destiné à coopérer avec le dispositif support amovible (210).

10. Véhicule automobile selon l'une quelconque des revendications 1 à 9, **caractérisé en ce que** l'accumulateur d'énergie élastique (52) est disposé à l'intérieur de la paroi transversale de véhicule (10) et traverse la paroi transversale de véhicule (10) au niveau d'une paroi de délimitation horizontale supérieure (24) à une ouverture de dégagement (25).

11. Véhicule automobile selon l'une quelconque des revendications 1 à 10, **caractérisé en ce que** le dispositif support amovible (210) comprend un élément de verrouillage (214) monté pivotant autour d'un axe de pivotement fixe (212), élément présentant une partie en forme de cliquet (216) pour une liaison active avec un contre-élément de verrouillage (218) disposé sur le corps de sécurité (6) dans la position de repos du corps de sécurité (6), l'élément de verrouillage (214) étant protégé, en position de repos, par un élément d'arrêt (222) d'un actionneur (224) contre un pivotement libérant le dispositif support (210).

12. Véhicule automobile selon la revendication 11, **caractérisé en ce que** l'élément de verrouillage (214) est réalisé sous la forme d'un disque présentant un évidement périphérique (228) dans lequel l'élément d'arrêt (222) vient en prise en position de repos, et présentant une butée périphérique (234) contre laquelle l'élément d'arrêt (222), retiré de l'évidement (228) par l'actionneur (224) pour le transfert du corps de sécurité (6) dans sa position d'appui, vient en contact après une rotation de l'élément de verrouillage (214) dégageant la partie en forme de cliquet (216) de son engagement avec le corps opposé de blocage (218).

13. Véhicule automobile selon l'une quelconque des revendications 11 ou 12, **caractérisé en ce que** l'élément d'arrêt (222) est déplaçable linéairement au moyen de l'actionneur (224) en direction axiale, l'élément d'arrêt (222) étant précontraint par un ressort (232) à l'encontre de l'élément de verrouillage (214).

14. Véhicule automobile selon l'une quelconque des revendications 11 à 13, **caractérisé en ce que** l'axe de pivotement (212) de l'élément de verrouillage (214) est constitué par le boulon (230), monté sur des faces en regard (240, 242) d'un corps de base (238), les faces (240, 242) du corps de base (238) étant reliées entre elles par une traverse (244) qui constitue un siège pour l'actionneur (224).

15. Véhicule automobile selon l'une quelconque des revendications 1 à 14, **caractérisé en ce que** le dispositif de blocage (500) présente un premier dispositif d'encliquetage (505) qui peut être mis en liaison active avec un deuxième dispositif d'encliquetage (506) pour l'appui du deuxième module (5), qui autorise un mouvement du deuxième module (5) à partir de sa position de repos en direction de sa position d'appui, et qui présente un cliquet d'arrêt (509, 519) précontraint en direction de sa position active, montée sur le premier module (4) ou le deuxième module (5), comprenant au moins une dent d'encliquetage (510) coopérant avec un élément d'encliquetage (507) du deuxième dispositif d'encliquetage (506) monté à chaque fois sur l'autre module (5, 4).

16. Véhicule automobile selon la revendication 15, **caractérisé en ce que** l'élément d'encliquetage (507) du deuxième dispositif d'encliquetage (506) est fabriqué à partir d'un profilé extrudé et réalisé au moins sensiblement sous la forme d'une baguette et présente plusieurs évidements alvéolaires (508) disposés les uns derrière les autres dans le sens de déplacement du deuxième module (5), dans lesquels le cliquet d'arrêt (509) vient à chaque fois en prise dans sa position active par son au moins une dent d'encliquetage (510) dépendant d'une position de départ du deuxième module (5).

17. Véhicule automobile selon l'une quelconque des revendications 15 ou 16, **caractérisé en ce que** le cliquet d'arrêt (519) est réalisé sous la forme d'une plaque et est précontraint élastiquement par un dispositif élastique (520), plus particulièrement un ressort à lames, et monté amovible en translation axiale à l'encontre du deuxième dispositif d'encliquetage (506).

18. Véhicule automobile selon l'une quelconque des revendications 15 ou 16, **caractérisé en ce que** le cliquet d'arrêt (509) est monté pivotant à l'encontre du deuxième dispositif d'encliquetage (506).

19. Véhicule automobile selon l'une quelconque des revendications 1 à 18, **caractérisé en ce qu'**entre les dispositifs de protection au retournement (2, 3) de deux sièges de véhicule (26, 28) est ménagée une ouverture de chargement (60).

20. Véhicule automobile selon l'une quelconque des revendications 1 à 19, **caractérisé en ce que** les dispositifs de protection au retournement (2, 3) de deux sièges de véhicule (26, 28) d'une rangée de sièges sont disposés à chaque fois en direction opposée sensiblement décentrés par rapport au siège de véhicule (26, 28) concerné.
